# EUROPÄISCHE PATENTSCHRIFT

(11) **EP 1 590 927 B1**
(45) Veröffentlichungstag und Bekanntmachung des Hinweises auf die Patenterteilung: **19.07.2006**
(21) Anmeldenummer: 04707214.5
(22) Anmeldetag: 02.02.2004
(51) Int. Cl.: H04L 12/46

(54) **KOPPLER FÜR EIN NETZWERK MIT RINGTOPOLOGIE UND EIN AUF ETHERNET BASIERTEN NETZWERK**
COUPLER FOR A RING TOPOLOGY NETWORK AND AN ETHERNET-BASED NETWORK
COUPLEUR POUR UN RESEAU A TOPOLOGIE EN ANNEAU ET UN RESEAU BASE SUR ETHERNET

(30) Priorität: 04.02.2003 DE 10304637
(43) Veröffentlichungstag der Anmeldung: 02.11.2005
(73) Patentinhaber: Beckhoff Automation GmbH, 33415 Verl (DE)
(72) Erfinder: BECKHOFF, Hans, 33415 Verl (DE); BÜTTNER, Holger, 12157 Berlin (DE)
(74) Vertreter: Wilhelm, Jürgen
(86) Internationale Anmeldenummer: PCT/EP2004/000934
(87) Internationale Veröffentlichungsnummer: WO 2004/071025

(56) Entgegenhaltungen:
- EP-A- 1 051 047
- DE-A- 10 056 390
- US-B1- 6 389 030

## Beschreibung

Der zur Zeit am weitesten verbreitete Standard für lokale Kommunikationsnetze, sogenannte "local area networks" (LANs) ist das Ethernet. Mit dem Ethernet lassen sich Daten aktuell mit einer Geschwindigkeit bis zu 100 Mbit/sec. (Mbps) übertragen. LANs sind lokale Kommunikationsnetzwerke, die auf ein geografisches Gebiet begrenzt sind und sich aus einem oder mehreren Servern und Arbeitsstationen, sogenannten Knoten, zusammensetzen, die über ein Kommunikationsleitungsnetz, z.B. ein Koaxial-, Glasfaser- oder Twisted-Pair-Kabel verbunden sind. Bei LANs sind verschiedene Netzwerktopologien z. B. Bus-, Stern- oder Baumstrukturen möglich.

LANs werden mit einem Netzwerk-Betriebssystem und einem Netzwerk-Protokoll betrieben. Das Ethernet stellt ein solches Netzwerk-Protokoll dar. Weiterhin unterstützt das Ethernet unterschiedlichste Kommunikationsprotokolle, z.B. das TCP/IP-Protokoll oder das IPX-Protokoll. Im OSI-Schichtenmodell, dem internationalen Referenzmodell für Datenübertragung im Netzwerk, das aus einem Schichtenstapel aus sieben Schichten aufgebaut ist, wobei für jede Schicht eine Menge von Protokollen definiert ist, die jeweils der nächst höheren Schicht ihre Dienste zur Verfügung stellen, ist das Ethernet der zweiten Schicht, der sogenannten Leitungsschicht, zugeordnet. In dieser Leitungsschicht werden die zu übermittelnden Daten im Paketen gebündelt, denen spezifische Informationen für das jeweilige Kommunikationsprotokoll hinzugefügt werden. Die Leitungsschicht ist im Netzwerk für den Transport der Datenpakete von Knoten zu Knoten und für die Fehlererkennung zuständig.

Beim Ethernet-Konzept ist die Leitungsschicht in zwei Ebenen unterteilt, wobei die erste Ebene den Daten einen Kopfabschnitt, einen sogenannten Header, hinzufügt, der Informationen enthält, die für eine korrekte Datenübertragung vom Empfänger-Protokoll benötigt werden. In der zweiten Ebene des Ethernet-Protokolls werden dann die Datenpakete mithilfe eines zusätzlichen Headers und eines weiteren Endabschnitts, eines sogenannten Trailers, für den Transport der Datenpakete von Knoten zu Knoten eingekapselt. Mit solchen Ethernet-Datenpaketen, sogenannten Ethernet-Telegrammen, lassen sich Daten mit eine Länge bis zu 1500 Bytes übertragen.

Das Ethernet legt weiterhin das Zugriffsverfahren fest, wie die einzelnen Knoten die physikalischen Verbindungswege des Netzwerkes nutzen und belegen dürfen. Das Ethernet arbeitet dabei nach dem sogenannten CSMA/CD (carrier sense multiple access/collision detect)-Zugriffsverfahren. Bei diesem Zugriffsverfahren wird vom sendewilligen Knoten vor dem Senden geprüft, ob der Übertragungsweg frei ist. Dann werden die Daten versandt. Da alle Knoten ihre Daten gleichzeitig verschicken können, kann es zu Kollisionen kommen. Von dem Knoten, der die Kollision bemerkt, wird dann der Sendevorgang unterbrochen. Um zu verhindern, dass zwei Knoten um eine geringe Zeitspanne versetzt mit dem Senden beginnen, erzeugen alle sendenden Knoten ein sogenanntes JAM-Signal, damit alle am Übertragungsweg befindlichen Knoten die Bearbeitung des aktuellen Datenpakets abbrechen und so den Sendevorgang nicht stören.

Das Ethernet-Protokoll wird vornehmlich bei Bürokommunikations-Netzwerken eingesetzt. Aufgrund der Vorteile des Ethernet-Konzepts, bei der Nutzung von Standard-Hardware- und - Softwarekomponenten sowie der Möglichkeit, auch bei einfacher Vernetzungstechnologie hohe Datenübertragungsraten zu erreichen, besteht der Wunsch, die Ethernet-Netzwerkkommunikation auch in der industriellen Fertigung zum Datenaustausch und zum Durchführen von Steuerungsaufgaben einsetzen zu können.

Insbesondere die mangelhafte Echtzeit-Fähigkeit des Ethernet-Protokolls lässt bisher jedoch nur einen begrenzten Einsatz in der Automatisierungstechnik zu. Bei der Steuerung von Maschinen ist es nämlich erforderlich, dass eine zyklische Bearbeitung der Steuerungsaufgabe ohne zeitliche Schwankungen, d.h. mit nur geringen Abweichungen von der gewünschten Zykluszeit im Bereich weniger Mikrosekunden folgt, wobei mit einer vorhersehbaren Antwortzeit auf die Regelanforderung reagiert wird. Das vom Ethernet verwendete CSMA/CD-Zugriffsverfahren garantiert solche festen Reaktionszeiten aber nicht. Bei sehr starker Netzwerkauslastung kann es aufgrund des verwendeten Zugriffsverfahrens nämlich passieren, dass Ethernet-Telegramme über einen gewissen Zeitraum nicht gesendet werden können, so dass eine garantierte Antwortzeit auf eine Regelanforderung nicht gewährleistet ist.

Um in Ethernet-Netzwerken trotzdem eine gewisse Echtzeit erreichen zu können, werden solche Ethernet-Netzwerke oft in Sterntopologie unter Verwendung sogenannter Switches aufgebaut. Dabei weist jeder Knoten, im Weiteren auch als Teilnehmer bezeichnet, eine Punkt-zu-Punkt-Verbindung zu dem Switch des Netzwerkes auf. Der Switch untersucht jedes auf dem Netzwerk durchlaufende Ethernet-Telegramm auf die Adresse des angesprochenen Teilnehmers und leitet dann das Ethernet-Telegramm an den adressierten Teilnehmer über die entsprechende Punkt-zu-Punkt-Verbindung weiter. Eine solche Netzwerktopologie aus lauter Punkt-zu-Punkt-Verbindungen zwischen den Teilnehmer und dem zentrale Switch erfordert aber eine aufwändige Verkabelung und ist deshalb mit hohen Kosten verbunden.

Um bei Ethernet-Netzwerken Echtzeitfähigkeit und schnelle Reaktionszeiten zu gewährleisten, besteht weiterhin die Möglichkeit, den Sendevorgang der Ethernet-Telegramme statt durch das CSMA/CD-Zugriffsverfahren durch übergeordnete Protokollschichten steuern zu lassen. Dies hat jedoch zur Folge, dass durch die notwendige zusätzliche Echtzeit-Protokollschicht eine verstärkte Auslastung bei dem Teilnehmer auftritt, die deshalb einen leistungsfähige Mikrocontroller benötigen, was wiederum hohe Kosten zur Folge hat.

Darüber hinaus fordert die Übertragung von Ethernet-Datenpaketen mit Längen bis zu 1500 Bytes und hohen Datenübertragungsraten von 100 Mbit/sec eine Aufrüstung der bei dem einzelnen Teilnehmer vorgesehenen Ethernet-Schnittstellen mit leistungsfähigen Datenverarbeitungseinheiten, um die großen Datenpakete abspeichern und schnell auslesen zu können.

Insbesondere dann, wenn Steuerungsaufgaben Prozessdaten mit nur wenigen Bytes erfordern, verhindert die zwingend erforderliche Datenlänge der Ethernet-Telegramme eine kostengünstige Schnittstellenauslegung. Das Ethernet als stationsorientiertes Netzwerk benötigt nämlich Datenlängen von mindestens 100 Bytes, was bei einer hohen Datenübertragungsrate von 100 Mbit/sec, wie erläutert einen leistungsfähigen Mikrocontroller für den Sende- und Empfangsvorgang erforderlich macht. Dies gilt umso mehr, wenn zur Gewährleistung einer Echtzeitfähigkeit das CSMA/CD-Zugriffsverfahren des Ethernet-Protokolls von einem Echtzeit-Kommunikationsprotokoll überlagert wird, so dass sich aufgrund dieses zusätzlichen Protokolls schon grundsätzlich große Ethernet-Telegrammpakete ergeben.

Aus der US 6,389,030 B1 ist ein Netzwerkkoppler mit den Merkmalen des Oberbegriffs des Anspruchs 1 und ein zugehöriges Netzwerk sowie ein Verfahren zum Datenaustausch mit den Merkmalen des Oberbegriffs des Anspruchs 7 bekannt.

Aufgabe der vorliegenden Erfindung ist es, einen Netzwerk-Koppler für ein Ethernet, ein Ethernet-Netzwerk sowie ein Ethernet-Datenübertragungsverfahren bereit zu stellen, mit dem sich auf einfache und kostengünstige Weise Echtzeit-Steuerungsaufgaben mithilfe von Ethernet-Telegrammen ausführen lassen.

Diese Aufgabe wird durch einen Netzwerk-Koppler nach Anspruch 1, ein Netzwerk nach Anspruch 5 und ein Verfahren nach Anspruch 7 gelöst. Bevorzugte Weiterbildungen sind in den abhängigen Ansprüchen angegeben.

Gemäß der Erfindung sind die für die Echtzeitanwendung vorgesehenen Teilnehmer an einem ringförmigen Übertragungsweg angeschlossen, wobei dieser ringförmige Übertragungsweg über einen Netzwerk-Koppler mit einem Netzwerk, auf dem Ethernet-Telegramme übertragen werden können, verbunden ist, wobei der Netzwerk-Koppler so ausgelegt ist, dass ein über eine externe Schnittstelle des Netzwerk-Kopplers vom Netzwerk empfangenes Ethernet-Telegramm an eine interne Schnittstelle des Netzwerk-Kopplers weitergeleitet und auf dem ringförmigen Übertragungsweg ausgegeben wird, wobei jeder an den ringförmigen Übertragungsweg angeschlossene Teilnehmer beim Durchlauf des Ethernet-Telegramms auf dem ringförmigen Übertragungsweg die für den jeweiligen Teilnehmer bestimmten Nutzdaten mit dem auf dem Übertragungsweg umlaufenden Ethernet-Telegramm austauscht.

Bei dieser Netzwerk-Auslegung erscheint der ringförmige Übertragungsweg mit dem Netzwerk-Koppler und den über den Netzwerk-Koppler an den Übertragungsweg angeschlossenen Teilnehmern gegenüber dem Netzwerk als ein einzelner Ethernet-Teilnehmer. Der Netzwerk-Koppler und die an den ringförmigen Übertragungsweg angeschlossenen Teilnehmer teilen sich eine einzelne Ethernet-Anschaltung, wodurch auf zusätzliche, im Stand der Technik erforderliche leistungsfähige Mikrocontroller zum Verarbeiten der Ethernet-Telegramme in den jeweiligen Teilnehmern selbst verzichtet werden kann. Durch die Verarbeitung der Ethernet-Telegramme auf dem ringförmigen Übertragungsweg im Durchlauf durch die daran angeschlossenen Teilnehmer verringert sich die Reaktionszeit der einzelnen Teilnehmer wesentlich, so dass mit den umlaufenden Ethernet-Telegrammen Steuerungsaufgaben in Echtzeit ausgeführt werden könInsbesondere ist es auch möglich, mit Standard-Ethernet-Telegrammen, die üblicherweise eine Datenlänge von mehreren 100 Bytes aufweisen, auch Teilnehmer einfach und kostengünstig anzusteuern, die nur wenige Bytes an Prozessdaten benötigen. Insbesondere ist es nicht erforderlich, dass die einzelnen Teilnehmer eine aufwändige Datenspeicher- und Verarbeitungseinheit aufweisen, um die bei Ethernet-Telegrammen erforderliche Protokoll-Verarbeitung vorzunehmen.

Gemäß einer bevorzugten Ausführungsform wird das Ethernet-Telegramm von der Übertragungsphysik des Netzwerkes auf die Übertragungsphysik des ringförmigen Übertragungsweges im Netzwerk-Koppler umgesetzt. Hierdurch ist es möglich, den ringförmigen Übertragungsweg gegenüber dem Ethernet-Netzwerk mit einer einfacheren und billigeren Übertragungsphysik mit geringer Reichweite auszustatten. So kann z.B. von einem Netzwerk-Glasfaserkabel auf ein Flachbandkabel, über das LVDS-Signale übertragen werden können, oder auf ein Lichtleiterkabel mit Hilfe des Netzwerk-Kopplers übergegangen werden.

Gemäß einer weiteren bevorzugten Ausführungsform wird im Netzwerk-Koppler eine Filterung von Ethernet-Telegrammen durchgeführt, die nicht für die an den ringförmigen Übertragungsweg angeschlossenen Teilnehmer gedacht sind. Hierdurch wird verhindert, dass nicht für die Steuerungsaufgaben notwendige Ethernet-Telegramme auf dem ringförmigen Übertragungsweg umlaufen und somit die möglichen Reaktionszeiten der Teilnehmer verschlechtern.

Gemäß einer weiteren bevorzugten Ausführungsform weist der Netzwerk-Koppler einen Mikrocontroller zum Bearbeiten von auf dem Netzwerk übertragenen azyklischen, nicht zeitkritischen Daten auf. Dies ist insbesondere dann vorteilhaft, wenn auf dem Netzwerk die Ethernet-Telegramme mit übergeordneten Programmen, z.B. TCP/IP-Protokollen oder IPX-Protokollen, übertragen werden, so dass der Mikrocontroller im Ethernet-Koppler dann auf einfache Weise die notwendigen Protokollumsetzungen vornehmen kann.

Bevorzugt ist es weiterhin, dass der ringförmige Übertragungsweg eine Zweikanal-Leitung ist, wobei der Netzwerk-Koppler auf dem ersten Kanal der Zweikanal-Leitung die Ethernet-Telegramme an die angeschlossenen Teilnehmer ausgibt, und der vom Netzwerk-Koppler aus gesehen letzte an die Zweikanalleitung angeschlossene Teilnehmer die durchgelaufenen und ggfs. modifizierten Ethernet-Telegramme dann auf dem zweiten Kanal zurücksendet, wobei jeder bis zum Netzwerk-Koppler zwischengeschaltete Teilnehmer die rückgesendeten Ethernet-Telegramme durchleitet. Diese Auslegung ermöglicht es, für den ringförmigen Übertragungsweg ein einzelnes Kabel, z.B. ein Twisted-Pair-Kabel zu verwendet, das eine solche Zweikanal-Leitung enthält. Der letzte angeschlossene Teilnehmer muss dabei nur die Rückkopplung des Ethernet-Telegramms vom ersten Kanal auf den zweiten Kanal durchführen.

Die Erfindung wird anhand der beigefügten Zeichnungen näher erläutert. Es zeigen:
- Figur 1A und B: ein erfindungsgemäßes Netzwerk mit Netzwerk-Koppler und ringförmig an den Netzwerk-Koppler angeschlossenen Teilnehmern, die eine erfindungsgemäße Verarbeitung eines Ethernet-Telegramms im Durchlauf ausführen, wobei Figur 1A eine Ausführung mit Ringleitung und Figur 1B eine Ausführung mit Zweikanal-Leitung wiedergibt;
- Figur 2: ein erfindungsgemäßes Netzwerk mit einem Netzwerk-Koppler und angeschlossenem ringförmigen Übertragungsweg, der über ein Standard-Ethernetkabel mit einem Steuerungsrechner verbunden ist;
- Figur 3: ein erfindungsgemäße Netzwerkausführung mit einem zwischengeschalteten Switch, an dem der erfindungsgemäße Netzwerk-Koppler angeschlossen ist, und
- Figur 4: ein erfindungsgemäßes Netzwerk mit einem zwischengeschalteten Switch, bei dem das Netzwerk mit höheren Kommunikationsprotokollen betrieben wird.

Mit lokalen Kommunikationsnetzen (LANs) lassen sich auf einfache Weise Daten und Ressourcen zwischen Arbeitsstationen, im Allgemeinen Computer oder Maschinen, im Weiteren auch Knoten oder Teilnehmer genannt, austauschen und gemeinsam nutzen. Das Ethernet-Konzept ist dabei der am weitesten verbreiterte Kommunikationsstandard im LAN.

Bei Ethernet-Netzwerken sind die Mehrzahl von Knoten über ein gemeinsames Übertragungsmedium miteinander verbunden, wobei eine Verkapselung der zu übermittelnden Daten in sogenannten Datenpaketen, im Weiteren auch als Ethernet-Telegramme bezeichnet, mit einem vorgegebenen Format vorgenommen wird.

Das Ethernet besteht aus drei Bereichen, nämlich dem Übertragungsmedium und den Netzwerk-Schnittstellen, d. h. der Hardware, der Menge von Protokollen, die den Zugriff auf das Übertragungsmedium steuern, und der Ethernet-Paketform. Das Ethernet stellt dabei grundsätzlich ein Busnetz dar, wobei beliebige Netzwerktopologien, z.B. Stern-, Bus- oder Baumnetze verwendet werden können. Ethernet-Datenübertragung findet dabei üblicherweise mithilfe des CSMA/CD-Zugriffsverfahrens statt, bei dem eine Datenübertragung nur durchgeführt wird, wenn das Netz ruhig ist. Darüber hinaus ist ein Kollisionsverhinderungsmechanismus vorgesehen. Das Ethernet-Datenpaket selbst kann dabei eine Datenlänge von bis zu 1500 Bytes aufweist, wobei die Daten mittels Header und Trailer, die eine Anfangskennung, die Ziel- und Quelladresse, den Datenpakettyp und den Fehlererkennungsmechanismus angeben, verkapselt sind.

Das Ethernet hat sich als Kommunikationsstandard für Netzwerksysteme vor allem in der Bürokommunikation durchgesetzt, da Standard-Hardware-Komponenten und -Software-Protokolle genutzt werden können und darüber hinaus hohe Datenübertragungsraten möglich sind. Aus diesem Grund ist es auch wünschenswert, den Ethernet-Standard in industrieller Umgebung bei der Datenübertragung, insbesondere von Steuerungsaufgaben nutzen zu können. Das wesentliche Problem besteht hierbei in der mangelnden Echtzeitfähigkeit des Ethernet-Standards, so dass Automatisierungsaufgaben mit Echtzeitanwendungen in der Regel von Ethernet-Kommunikationsnetzen getrennt in eigenständigen Steuerungsbaugruppen, sogenannten Feldbussystemen, durchgeführt werden.

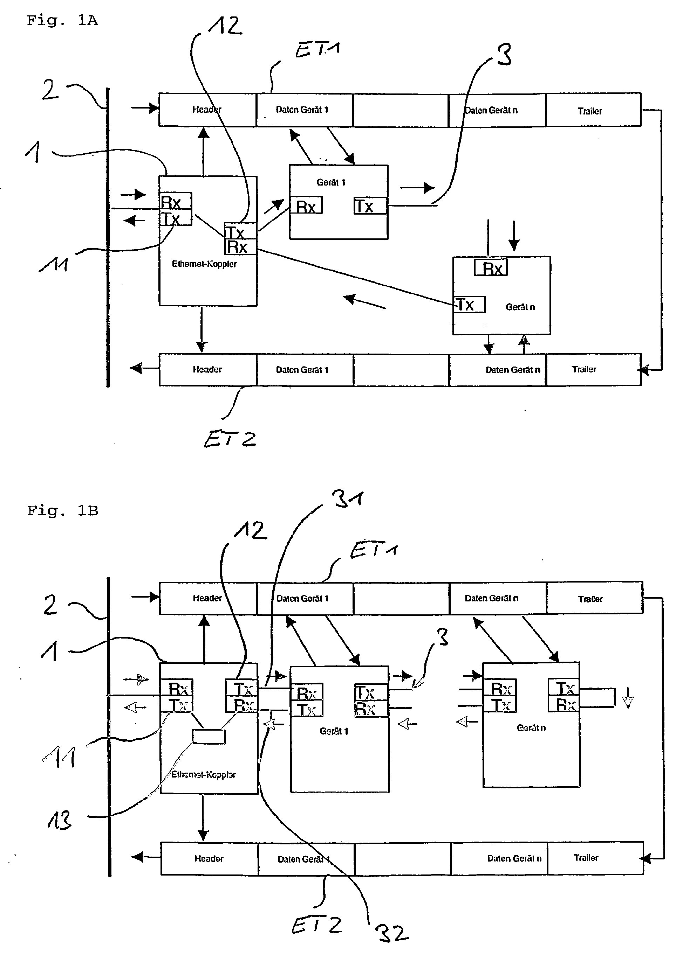

Um den Ethernet-Standard und ein entsprechend ausgelegtes Netzwerk auf einfache und kostengünstige Weise auch zur Ausführung von Automatisierungsaufgaben, insbesondere solchen, bei denen die einzelnen, an der Steuerung beteiligten Teilnehmer, Prozessdaten von nur wenigen Bytes benötigen, verwenden zu können, wird, wie in Figur 1A gezeigt, erfindungsgemäß ein Netzwerkaufbau realisiert, bei dem ein zusätzlicher Netzwerk-Koppler 1, im Weiteren auch als Ethernet-Koppler bezeichnet, vorgesehen ist, der eine externe Schnittstelle 11 zur Anbindung an ein Ethernet-Netzwerk 2 aufweist. In der in Figur 1A gezeigten Ausführungsform ist der Ethernet-Koppler 1 mit seiner externen Schnittstelle 11 dabei direkt an das Netzwerk-Übertragungsmedium angeschlossen. Das Übertragungsmedium kann ein Koaxialkabel, ein Twisted-Pair-Kabel oder ein Glasfaserkabel sein.

Die externe Schnittstelle 11 des Netzwerk-Kopplers 1 ist mit einer Empfangseinheit RX zum Empfang eines Ethernet-Telegramms vom Netzwerk-Übertragungsmedium 2 und einer Sendeeinheit TX zum Senden eines Ethernet-Telegramms auf dem Netzwerk-Übertragungsmedium 2 ausgestattet. Figur 1 zeigt solch ein vom Ethernet-Koppler 1 empfangenes Ethernet-Telegramm ET1 und ein vom Ethernet-Koppler 1 gesendetes Ethernet-Telegramm ET2. Jedes der beiden Ethernet-Telegramme ET1, ET2 setzt sich aus einem Header mit der Empfangskennung und der Ziel- und Quelladresse, einem Datenbereich sowie einem Trailer, der eine Paketlänge und einen Fehlererkennungsmechanismus angibt, zusammen. Der zwischen dem Header und dem Trailer vorgesehene Datenbereich enthält die für die Steuerungsaufgabe notwendigen Prozessdaten, die vorzugsweise ein gesamtes Prozessabbild wiedergeben. Diese Prozessdaten sind wiederum vorzugsweise in für die einzelnen Teilnehmer der Steuerungsaufgabe erforderlichen Datenblöcken, d. h. für Teilnehmer Gerät 1 "Daten Gerät 1" usw. gruppiert.

Der Ethernet-Koppler 1 ist weiter über eine interne Schnittstelle 12 an eine Reihe von Teilnehmern, die als Gerät 1 bis n gekennzeichnet sind, über einen ringförmigen Übertragungsweg 3 angeschlossen. Dieser ringförmige Übertragungsweg 3 schließt die Teilnehmer Gerät 1 bis n, zu einer Ringtopologie zusammen, wobei als Dateneinkoppelstelle eine Sendeeinheit TX der internen Schnittstelle 12 des Ethernet-Kopplers 1 ist und als die Datenauskoppelstelle eine Empfangseinheit RX der internen Schnittstelle 12 des Ethernet-Kopplers 1 dient.

Die einzelnen Teilnehmer am Übertragungsweg 3 sind zu einer Kette zusammen geschlossen, wobei jeder Teilnehmer mit zwei Nachbarn, der erste und letzte Teilnehmer in der Kette dabei mit dem Ethernet-Koppler 1 verbunden ist. Die Datenübertragung erfolgt dabei in eine Richtung ausgehend vom Ethernet-Koppler 1 zum Teilnehmer Gerät 1 und von dort bis zum Teilnehmer Gerät n und dann zurück in den Ethernet-Koppler 1. Die Übertragungsrichtung ist in Fig. 1A mit einem Pfeil angedeutet. Jeder Teilnehmer weist zum Empfang des umlaufenden Ethernet-Telegramms von dem vorherigen Teilnehmer eine Schnittstelle mit einer Empfangseinheit RX und zur Weitergabe an den nächstfolgenden Teilnehmer eine Schnittstelle mit einer Sendeeinheit TX auf.

Der Datenaustausch erfolgt dabei folgendermaßen: Das vom Netzwerk 1 geschicktes Ethernet-Telegramm ET1 mit den Prozessdaten für die einzelnen Teilnehmer der Automatisierungsaufgabe wird durch die Empfangseinheit RX der externen Schnittstelle 11, die das Netzwerk mit dem Ethernet-Koppler 1 verbindet, empfangen. Das empfangene Ethernet-Telegramm wird dann von der externen Schnittstelle 11 an die interne Schnittstelle 12 weitergegeben, wobei die Sendeeinheit TX der internen Schnittstelle 12 das Ethernet-Telegramm ohne nennenswerte Verzögerung sofort auf den ringförmigen Übertragungsweg 3 ausgeht.

Jeder am ringförmigen Übertragungsweg 3 angeschlossene Teilnehmer entnimmt dann die für ihn bestimmten Prozessdaten aus dem umlaufenden Ethernet-Telegramm (Pfeile in Fig. 1A), d. h. der Teilnehmer Gerät 1 die "Daten Gerät 1" usw. und fügt seinerseits die sich aus der Prozessdurchführung ergebenden Prozessdaten wiederum an die entsprechende Stelle im Ethernet-Telegramm ein. Das so umlaufende Ethernet-Telegramm wird dann nach Durchlauf durch das letzte Teilnehmer Gerät n an die Empfangseinheit RX der internen Schnittstelle 12 des Ethernet-Kopplers 1 gesendet und von dort an die externe Schnittstelle 11 weitergeleitet, die das Ethernet-Telegramm ET2 mit der Sendeeinheit TX in das Ethernet-Netzwerk 1 einspeist. Der beschriebene Datenaufbau der umlaufenden Ethernet-Telegramme ist dabei nur beispielhaft.

Die erfindungsgemäße Lösung einer Ankopplung der Teilnehmer einer Automatisierungsaufgabe an das Ethernet-Netzwerk über einen Ethernet-Koppler, wobei die Teilnehmer über eine Ringstruktur zusammengeschlossen sind, hat den Vorteil, dass die an dem Ethernet-Koppler angeschlossenen Geräte vom Ethernet-Netzwerk als ein einzelner Standard-Ethernet-Teilnehmer angesehen werde. Durch die.spezielle Ethernet-Anschaltung im Ethernet-Koppler wird das von diesem empfangene Ethernet-Telegramm ohne nennenswerte Verzögerung auf die Ringstruktur ausgegeben, so dass jeder Teilnehmer die an ihn gerichtete Daten im Ethernet-Telegramm während des Durchlaufs des Ethernet-Telegramms auf dem Übertragungsring entnehmen und seinerseits die entsprechenden Daten einfügen kann. Die Vorteile dieser Vorgehensweise sind, dass aufgrund der Verarbeitung des Ethernet-Telegramms im Durchlauf keine nennenswerten Verzögerungen bei der Datenverarbeitung entstehen und somit kurze Reaktionszeiten, wie sie für eine Echtzeitanwendung erforderlich sind, eingehalten werden können. Ein weiterer Vorteil ist, dass die Ethernet-Anschaltkosten pro Teilnehmer minimiert werden können, da alle angeschlossenen Teilnehmer mit dem Ethernet-Koppler die Ethernet-Anschaltung teilen und durch die Verarbeitung des Ethernet-Telegramms im Durchlauf keine leistungsfähigen Mikrocontroller in den Geräten selbst notwendig sind.

Der ringförmige Übertragungsweg kann eine einfache und damit billige Übertragungsphysik mit auch geringer Reichweite haben. So kann für den Übertragungsweg beispielsweise ein Flachbandkabel, über das LVDS-Signale übertragen werden können, oder ein Lichtleiterkabel statt der aufwändigen Twisted-Pair-Kabel oder Glasfaserkabel eingesetzt werden. Falls sich die Übertragungsphysik des Ethernet-Netzwerkes von dem des ringförmigen Übertragungsweges unterscheidet, ist im Ethernet-Koppler 1 eine Verarbeitungseinrichtung 13, wie sie in Figur 1B gezeigt ist, notwendig, um ein Ethernet-Telegramm von Übertragungsphysik des Netzwerkes 2 auf die des ringförmigen Übertragungsweges 3 umzusetzen. Diese Verarbeitungseinheit 13 ist zwischen der externen Schnittstelle 11 und internen Schnittstelle 12 des Ethernet-Kopplers 1 angeordnet. Weiterhin können von der Verarbeitungseinheit 13 ggfs. notwendigen Änderungen am Ethernet-Telegramm vorgenommen werden, um den Ethernet-Standard für auf dem Übertragungswege 3 ausgegebene modifizierte Ethernet-Telegramme zu garantieren, z.B. durch Vertauschung von Quell- und Zieladresse und Neuberechnung einer Ethernet-Checksumme.

Figur 1B zeigt dabei eine weitere mögliche Ausführungsform des ringförmigen Übertragungsweges 3. Statt einem Einkanal-Übertragungsweges, wie in Figur 1A gezeigt, ist in Fig. 1B ein Zweikanal-Übertragungsweg vorgesehen. Die Übertragung findet dabei so statt, dass das vom Ethernet-Koppler 1 auf den Übertragungsweg 3 ausgegebene Ethernet-Telegramm mit den Prozessdaten auf einem ersten Kanal 31 vom Teilnehmer Gerät 1 bis zum Teilnehmer Gerät n weitergegeben wird, wobei jeder Teilnehmer beim Durchlauf den gewünschten Datenaustausch vornimmt. Der letzte angeschlossene Teilnehmer Gerät n koppelt dann das verarbeitete Ethernet-Telegramm auf einen zweiten Kanal 32 zurück, wobei jeder zwischen dem Teilnehmer Gerät n und dem Ethernet-Koppler 1 zwischengeschaltete weitere Teilnehmer das Ethernet-Telegramm nur durchleitet. Diese Ausgestaltung ermöglicht es, den üblicherweise verwendeten Voll-Duplex-Übertragungsweg des Ethernet-Netzwerkes auch für den ringförmigen Übertragungsweg zum Anschluss der Automatisierungsteilnehmer an den Ethernet-Koppler zu verwenden. Jeder Teilnehmer weist zur Weitergabe der Ethernet-Telegramme auf die Voll-Duplex-Leitung vorzugsweise zwei Schnittstellen auf, die jeweils komplementär eine Sendeeinheit TX und eine Empfangseinheit RX aufweisen, um auf dem ersten und dem zweiten Kanal senden bzw. empfangen zu können.

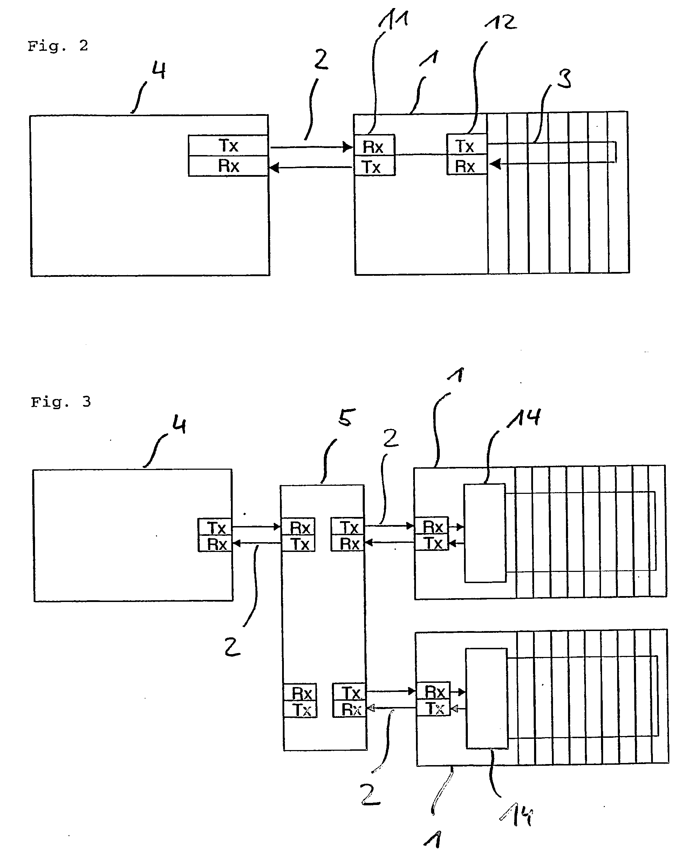

Figur 2 zeigt eine einfache Anbindung des Ethernet-Kopplers 1 über ein Voll-Duplex-Ethernetkabel an einem Steuerungsrechner 4. Der Ethernet-Koppler 1 benötigt für den Datenaustausch nur die externe Schnittstelle 11 und die interne Schnittstelle 12 und ggfs. eine Verarbeitungseinheit (nicht gezeigt) zum Umsetzen der Übertragungsphysik. Die angeschlossenen Geräte wiederum weisen eine Schnittstelle (nicht gezeigt) auf, die es ermöglicht, das vom Ethernet-Koppler auf den ringförmigen Übertragungsweg ausgegebene Ethernet-Telegramm im Durchlauf zu interpretieren, um die entsprechenden Daten mit der angeschlossenen Hardware im Gerät auszutauschen, wobei es sich bei der angeschlossenen Hardware sowohl um eine Schnittstelle zu einem Mikrocontroller als auch um direkte Prozesssignale von Signalgebern handeln kann.

Figur 3 zeigt eine weitere Netzauslegung, bei der der Ethernet-Koppler 1 über einen Switch 5 mit dem Steuerungsrechner 4 verbunden ist. Der Ethernet-Koppler 1 weist bei dieser Ausführungsform vorzugsweise zusätzlich ein Filter 14 auf, mit dem es ermöglicht wird, Ethernet-Telegramme herauszufiltern, die nicht für die an den Netzwerk-Koppler angeschlossenen Teilnehmer bestimmt sind. Dadurch wird eine schnellere Verarbeitung der Ethernet-Telegramme für die Automatisierungsaufgaben der an den Ethernet-Koppler angeschlossenen Teilnehmer gewährleistet.

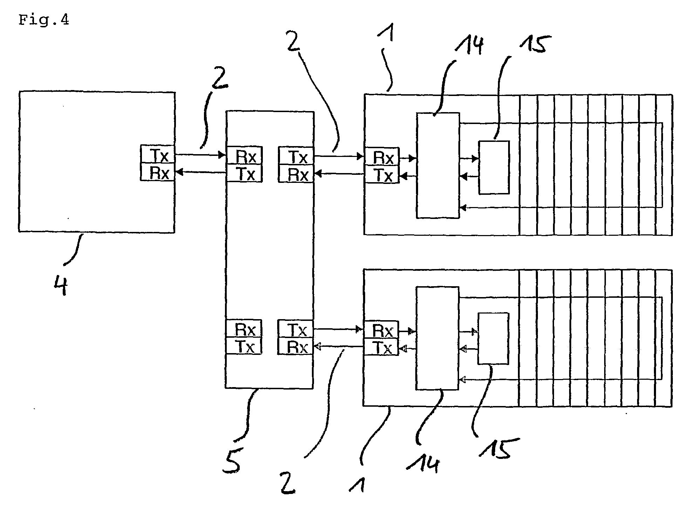

Figur 4 zeigt eine mögliche Netzwerk-Ausführungsform, bei der auf dem Netzwerk mit dem Switch 5 die Ethernet-Telegramme zusätzlich mit Hilfe eines übergeordneten Kommunikationsprogrammen z. B. TCP/IP-Protokoll verwaltet werden. Der Ethernet-Koppler 1 weist zur Verarbeitung dieser übergeordneten Protokolle dann weiter einen Mikrocontroller 15 auf, der an das Filter 14 angeschlossen ist und die notwendigen Protokolleigenschaften abbildet Die azyklischen, nicht zeitkritischen Daten werden von dem Mikrocontroller 15 im Ethernet-Koppler 1 bearbeitet, das Ethernet-Telegramm mit den zeitkritischen Daten dagegen auf den ringförmigen Übertragungsweg zum Datenaustausch mit den angeschlossenen Teilnehmer ausgegeben.

## Patentansprüche

1. Netzwerk-Koppler (1) mit einer externen Schnittstelle (11) zur Anbindung an ein Netzwerk (2), auf dem Ethernet-Telegramme (ET) übertragen werden können, und einer internen Schnittstelle (12) zur Anbindung einer Mehrzahl von Teilnehmern (Gerät 1, ..., Gerät n) in Reihe an einen ringförmigen Übertragungsweg (3), wobei ein über die externen Schnittstelle (11) empfangenes Ethernet-Telegramm (ET) an die interne Schnittstelle (12) weitergeleitet und auf den ringförmigen Übertragungsweg (3, 31) ausgegeben wird,
**dadurch gekennzeichnet, dass**
jeder an die interne Schnittstelle (12) angeschlossene Teilnehmer (Gerät 1, ..., Gerät n) beim Durchlauf des Ethernet-Telegramms auf dem ringförmigen Übertragungsweg durch den entsprechenden Teilnehmer die für den Teilnehmer bestimmten Nutzdaten mit dem auf dem Übertragungsweg umlaufenden Ethernet-Telegramm (ET) austauscht, wobei der Teilnehmer Daten aus dem dem Teilnehmer (ET) zugeordneten Datenblock (Daten Gerät 1, ..., Daten Gerät n) im Datenbereich des Ethernet-Telegramms (ET) entnehmen und seinerseits Daten in den dem Teilnehmer zugeordneten Datenblock des Datenbereich des Ethernet-Telegramms einfügen kann.

2. Netzwerk-Koppler nach Anspruch 1, **dadurch gekennzeichnet, dass** zwischen der externen Schnittstelle (11) und der internen Schnittstelle (12) eine Einrichtung (13) zum Umsetzen der Ethernet-Telegramme zwischen der Übertragungsphysik des Netzwerks (2) und der Übertragungsphysik des ringförmigen Übertragungswegs (31) vorgesehen ist.

3. Netzwerk-Koppler nach Anspruch 1 oder 2, **dadurch gekennzeichnet, dass** eine Einrichtung (14) zum Filtern von nicht für die angeschlossenen Teilnehmer bestimmten Ethernet-Telegrammen vorgesehen ist.

4. Netzwerk-Koppler nach einem der Ansprüche 1 bis 3, **dadurch gekennzeichnet, dass** eine Mikrocontroller (15) zum Bearbeiten von auf dem Netzwerk übertragenen azyklischen, nicht zeitkritischen Daten vorgesehen ist.

5. Netzwerk mit einem Ethernet-Koppler (1) nach einem der Ansprüche 1 bis 4 und einer Mehrzahl von Teilnehmern (Gerät 1, ..., Gerät n), die in Reihe über einen ringförmigen Übertragungsweg (3) an die interne Schnittstelle (11) des Ethernet-Kopplers angeschlossen sind, **dadurch gekennzeichnet, dass** die Teilnehmer (Gerät 1, ..., Gerät n) jeweils ausgelegt sind, die auf dem ringförmigen Übertragungsweg durchlaufenden Ethernet-Telegramme (ET) zu interpretieren und einen Datenaustausch vorzunehmen.

6. Netzwerk nach Anspruch 5, **dadurch gekennzeichnet, dass** der ringförmige Übertragungsweg (31) ein Zweikanal-Leitung ist, wobei die interne Schnittstelle (12) des Netzwerk-Kopplers (1) die Ethernet-Telegramme auf einem ersten Kanal (31) der Zweikanal-Leitung an die angeschlossenen Teilnehmer ausgibt und der vom Netzwerk-Koppler aus gesehen letzte an die Zweikanal-Leitung angeschlossene Teilnehmer die durchlaufenden Ethernet-Telegramme auf einem zweiten Kanal (32) zurückgesendet, wobei jeder bis zum Netzwerk-Koppler zwischengeschaltete Teilnehmer die rückgesendeten Ethernet-Telegramme durchleitet.

7. Verfahren zum Austausch von Daten zwischen einem Netzwerk, auf dem Ethernet-Telegramme übertragen werden können, und einer Mehrzahl von Teilnehmern über einen Netzwerk-Koppler, wobei das Netzwerk an eine externen Schnittstelle des Netzwerk-Kopplers angebunden ist und die Mehrzahl von Teilnehmern über eine internen Schnittstelle des Netzwerk-Kopplers in Reihe an einen ringförmigen Übertragungsweg angebunden sind, wobei ein über die externen Schnittstelle des Netzwerk-Kopplers empfangenes Ethernet-Telegramm an die interne Ethernet-Schnittstelle des Netzwerk-Kopplers weitergeleitet und auf den ringförmigen Übertragungsweg ausgegeben wird,
**dadurch gekennzeichnet, dass**
jeder an die interne Schnittstelle angeschlossene Teilnehmer beim Durchlauf des Ethernet-Telegramms auf dem ringförmigen Übertragungsweg durch den entsprechenden Teilnehmer die für den Teilnehmer bestimmten Nutzdaten mit dem auf dem Übertragungsweg umlaufenden Ethernet-Telegramm austauscht, wobei der Teilnehmer Daten aus dem dem Teilnehmer zugeordneten Datenblock im Datenbereich des Ethernet-Telegramms entnehmen und seinerseits Daten in den dem Teilnehmer zugeordneten Datenblock des Datenbereich des Ethernet-Telegramms einfügen kann.

8. Verfahren nach Anspruch 7, wobei ein Umsetzen der Ethernet-Telegramme zwischen der Übertragungsphysik des Netzwerks und der Übertragungsphysik des ringförmigen Übertragungswegs durchgeführt wird.

9. Verfahren nach Anspruch 7 oder 8, wobei eine Filtern von nicht für die an den ringförmigen Übertragungsweg angeschlossenen Teilnehmer bestimmten Ethernet-Telegrammen durchgeführt wird.

## Claims

1. Network coupler (1) with an external interface (11) for linking to a network (2) on which Ethernet telegrams (ET) can be transmitted and with an internal interface (12) for linking a plurality of subscribers (device 1,..., device n) in series to a ring-shaped transmission path (3), wherein an Ethernet telegram (ET) received via the external interface (11) is forwarded to the internal interface (12) and output on to the ring-shaped transmission path (3, 31), **characterised in that**, when the Ethernet telegram passes through the relevant subscriber on the ring-shaped transmission path, each subscriber (device 1,..., device n) connected to the internal interface (12) exchanges the user data intended for the subscriber with the Ethernet telegram (ET) circulating on the transmission path, wherein the subscriber can remove data from the data block (data device 1,..., device n) assigned to the subscriber (ET) in the data area of the Ethernet telegram (ET) and on its part add data into the data block of the data area of the Ethernet telegram assigned to the subscriber.

2. Network coupler according to claim 1, **characterised in that** provided between the external interface (11) and the internal interface (12) is a device (13) for converting the Ethernet telegrams between the transmission physics of the network (2) and the transmission physics of the ring-shaped transmission path (31).

3. Network coupler according to claim 1 or 2, **characterised in that** a device (14) for filtering Ethernet telegrams not intended for the connected subscribers is provided.

4. Network coupler according to one of claims 1 to 3, **characterised in that** a microcontroller (15) is provided to process acyclic, non-time-critical data transmitted on the network.

5. Network with an Ethernet coupler (1) according to one of claims 1 to 4 and a plurality of subscribers (device 1,..., device n), connected in series to the internal interface (11) of the Ethernet coupler via a ring-shaped transmission path (3), **characterised in that** the subscribers (device 1,..., device n) are configured in each case to interpret the Ethernet telegrams (ET) passing through on the ring-shaped transmission path and to perform a data exchange.

6. Network according to claim 5, **characterised in that** the ring-shaped transmission path (31) is a two-channel line, wherein the internal interface (12) of the network coupler (1) outputs the Ethernet telegrams to the connected subscribers on a first channel (31) of the two-channel line and the subscriber last connected to the two-channel line, seen from the network coupler, returns the Ethernet telegrams passing through on a second channel (32), wherein each subscriber intermediately switched as far as the network coupler conducts through the returned Ethernet telegrams.

7. Method for exchanging data between a network, on which Ethernet telegrams can be transmitted, and a plurality of subscribers via a network coupler, wherein the network is linked to an external interface of the network coupler and the plurality of subscribers is linked in series to a ring-shaped transmission path via an internal interface of the network coupler, an Ethernet telegram received via the external interface of the network coupler being forwarded to the internal Ethernet interface of the network coupler and output on to the ring-shaped transmission path, **characterised in that**, when the Ethernet telegram passes through the relevant subscriber on the ring-shaped transmission path, each subscriber connected to the internal interface exchanges the user data intended for the subscriber with the Ethernet telegram circulating on the transmission path, wherein the subscriber can remove data from the data block assigned to the subscriber in the data area of the Ethernet telegram and on its part add data into the data block of the data area of the Ethernet telegram assigned to the subscriber.

8. Method according to claim 7, wherein conversion of the Ethernet telegrams between the transmission physics of the network and the transmission physics of the ring-shaped transmission path is carried out.

9. Method according to claim 7 or 8, wherein filtering of Ethernet telegrams not intended for the subscribers connected to the ring-shaped transmission path is carried out.

## Revendications

1. Coupleur de réseau (1) avec une interface externe (11) pour la liaison avec un réseau (2), sur lequel peuvent être transmis des télégrammes Ethernet (ET), et une interface interne (12) pour la liaison d'une pluralité de participants (appareil 1, ..., appareil n) en série sur une voie de transmission (3) en anneau, un télégramme Ethernet (ET), reçu à travers l'interface externe (11), étant transmis à l'interface interne (12) et délivré sur la voie de transmission (3, 31) en anneau, **caractérisé en ce que** chaque participant (appareil n, ..., appareil n) raccordé à l'interface interne (12) échange, lors du passage du télégramme Ethernet sur la voie de transmission en anneau, par le participant correspondant, les données utiles, destinées au participant, avec le télégramme Ethernet (ET) circulant sur la voie de transmission, le participant pouvant prélever des données du bloc de données (données appareil 1, ..., données appareil n) associé au participant (ET) dans le domaine de données du télégramme Ethernet (ET) et pouvant insérer de son côté des données dans le bloc de données associé au participant, du domaine de données du télégramme Ethernet.

2. Coupleur de réseau selon la revendication 1, **caractérisé en ce qu'**il est prévu, entre l'interface externe (11) et l'interface interne (12), un dispositif (13) pour le transfert des télégrammes Ethernet entre la physique de transmission du réseau (2) et la physique de transmission de la voie de transmission (31) en anneau.

3. Coupleur de réseau selon la revendication 1 ou 2, **caractérisé en ce qu'**il est prévu un dispositif (14) pour filtrer des télégrammes Ethernet non destinés aux participants raccordés.

4. Coupleur de réseau selon l'une des revendications 1 à 3, **caractérisé en ce qu'**il est prévu un microcontrôleur (15) pour traiter des données acycliques et non critiques dans le temps, transmises sur le réseau.

5. Réseau avec un coupleur Ethernet (1) selon l'une des revendications 1 à 4 et pluralité de participants (appareil 1, ..., appareil n) qui sont raccordés en série par une voie de transmission (3) en anneau à l'interface interne (11) du coupleur Ethernet, **caractérisé en ce que** les participants (appareil 1, ..., appareil n) sont conçus chacun pour interpréter les télégrammes Ethernet (ET) circulant sur la voie de transmission en anneau et pour procéder à un échange de données.

6. Réseau selon la revendication 5, **caractérisé en ce que** la voie de transmission (31) en anneau est une ligne à deux canaux, l'interface interne (12) du coupleur de réseau (1) délivrant les télégrammes Ethernet sur un premier canal (31) de la ligne à deux canaux aux participants raccordés, et le dernier participant, vu depuis le coupleur de réseau, raccordé à la ligne à deux canaux renvoyant les télégrammes Ethernet circulant, sur un deuxième canal (32), chaque participant couplé jusqu'au coupleur de réseau, transmettant les télégrammes Ethernet renvoyés.

7. Procédé pour l'échange de données entre un réseau, sur lequel peuvent être transmis des télégrammes Ethernet, et une pluralité de participants par l'intermédiaire d'un coupleur de réseau, le réseau étant relié à une interface externe du coupleur de réseau et la pluralité de participants étant reliée par une interface interne du coupleur de réseau en série, à une voie de transmission en anneau, un télégramme Ethernet reçu par l'interface externe du coupleur de réseau étant transmis à l'interface Ethernet interne du coupleur de réseau et étant délivré sur la voie de transmission en anneau,
**caractérisé en ce que** chaque participant raccordé à l'interface interne échange, lors du passage du télégramme Ethernet sur la voie de transmission en anneau, par le participant correspondant, les données utiles, destinées au participant, avec le télégramme Ethernet circulant sur la voie de transmission, le participant pouvant prélever des données du bloc de données associ au participant dans le domaine de données du télégramme Ethernet et pouvant insérer de son côté des données dans le bloc de données associé au participant, du domaine de données du télégramme Ethernet.

8. Procédé selon la revendication 7, pour lequel est exécuté un transfert des télégrammes Ethernet entre la physique de transmission du réseau et la physique de transmission de la voie de transmission en anneau.

9. Procédé selon la revendication 7 ou 8, pour lequel est exécuté un filtrage des télégrammes Ethernet non destinés aux participants raccordés à la voie de transmission en anneau.
